**Europäisches Patentamt**

**European Patent Office**

**Office européen des brevets**

(19)

(11) Numéro de publication: **0 084 466**
**B1**

# (12) FASCICULE DE BREVET EUROPÉEN

(45) Date de publication du fascicule du brevet:
**21.09.88**

(51) Int. Cl.⁴: **G 01 S 7/52,** G 10 K 11/34

(21) Numéro de dépôt: **83400019.2**

(22) Date de dépôt: **04.01.83**

(54) **Système d'antenne à pouvoir séparateur élevé.**

(30) Priorité: **06.01.82 FR 8200236**

(43) Date de publication de la demande:
**27.07.83 Bulletin 83/30**

(45) Mention de la délivrance du brevet:
**21.09.88 Bulletin 88/38**

(84) Etats contractants désignés:
**DE GB IT NL SE**

(56) Documents cité:
**FR-A-2 241 078**
**FR-A-2 412 177**
**FR-A-2 419 621**
**US-A-3 458 854**

(73) Titulaire: **THOMSON- CSF, 173, Boulevard Haussmann, F-75379 Paris Cédex 08 (FR)**

(72) Inventeur: **Grall, Georges, THOMSON- CSF SCPI 173, bld Haussmann, F-75379 Paris Cedex 08 (FR)**
Inventeur: **Joseph, Jacques, THOMSON- CSF SCPI 173, bld Haussmann, F-75379 Paris Cedex 08 (FR)**
Inventeur: **Lemoine, Claude, THOMSON- CSF SCPI 173, bld Haussmann, F-75379 Paris Cedex 08 (FR)**

(74) Mandataire: **Wang, Pierre, THOMSON- CSF SCPI 173, Bld Haussmann, F-75379 Paris Cedex 08 (FR)**

## Description

La présente invention a pour objet un système d'antennes à pouvoir séparateur élevé.

L'invention s'applique plus particulièrement à la détection de cibles dans un système de détection d'ondes, notamment sonar dans lequel des sondes sont émises et reçues après réflexion sur la ou les cibles par des antennes d'émission et de réception non identiques.

Dans un tel système on recherche plus particulièrement à obtenir un pouvoir séparateur angulaire, c'est-à-dire l'aptitude du système d'antennes à distinguer deux cibles proches, qui soit maximal compte tenu de la dimension des antennes d'émission et de réception.

Des systèmes d'antennes sont connus pour lesquels on a recherché un tel pouvoir séparateur.

Il est ainsi connu d'associer une antenne d'émission pratiquement omnidirectionnelle, à une antenne de réception, composée de transducteurs placés côte à côte le long d'une ligne de longueur totale L. Une telle antenne de réception est dite pleine.

Il est connu également d'associer une antenne pleine à l'émission avec une antenne pleine à la réception. Dans ce cas une antenne unique peut grâce à la reversibilité des transducteurs jouer à la fois le rôle d'antenne d'émission et de réception.

Le pouvoir séparateur d'un dispositif à antennes d'émission et de réception pleines est connu, si l'amplitude et la phase sont constantes pour les transducteurs. Il en est de même si l'amplitude est constante et la phase augmente d'une valeur constante d'un transducteur à l'autre.

Dans le document FR-A-2 064 400, on a proposé un moyen pour obtenir un pouvoir séparateur élevé. Le principe consiste à utiliser à l'émission une antenne composée de transducteurs uniformément répartis et à la réception une antenne ne comportant que deux transducteurs d'extrémité. Les deux antennes ayant sensiblement la même longueur. En additionnant les signaux délivrés par ces transducteurs d'extrémité on obtient un diagramme de rayonnement de type consinusoïdal qui vient en facteur multiplicateur du diagramme de rayonnement de l'antenne d'émission pleine.

Par ailleurs, il est connu, notamment par le document FR-A-2 241 078 de préformer à la réception d'une antenne pleine, des voies angulaires, par application des signaux détectés par les transducteurs à des déphaseurs à prises multiples. Les différentes voies étant obtenues par sommation de signaux déphasés.

Il est connu par le document FR-A-2 412 177 de réaliser un système d'antennes comprenant des antennes d'émission et de réception de même longueur, l'antenne de réception étant pleine et l'antenne d'émission étant formée par deux transducteurs placées aux extrémités. Les signaux reçus par l'antenne de réception étant appliqués à des circuits de formation de voies. Pour le dispositif les émissions se font simultanément à deux fréquences. Pour la première fréquence les deux transducteurs d'émission sont en phase, alors que pour la seconde fréquence ils sont en opposition de phase. Les voies formées correspondent pour une moitié à l'une des fréquences et pour l'autre moitié à l'autre fréquence.

La largeur angulaire à 3 dB, du lobe principale du diagramme émission-réception, est la moitié de celle obtenue avec la même antenne de réception avec un seul transducteur d'émission.

Le désavantage de ce système d'antennes est dû au fait, que les lobes secondaires du diagramme émission-réception sont élevés, notamment le premier, qui a un maximum à 13 dB. Un tel niveau de secondaires détériore gravement le rapport signal sur bruit, notamment en acoustique sous-marine.

La présente invention remédie à ces inconvénients, par une réduction de la distance des deux transducteurs émetteurs et une pondération des signaux reçus et permet d'obtenir une bonne résolution angulaire et un bas niveau des lobes secondaires.

C'est un système d'antennes pour une détection d'ondes, notamment sonar, à pouvoir séparateur élevé, du type comprenant une antenne d'émission et une antenne de réception, l'antenne de réception étant composée de transducteurs $(T_1 - T_n)$ répartis sur une longueur $L_R$, et l'antenne d'émission étant composée de deux transducteurs $(T_i, T_{n-i+1})$ placés sensiblement aux extrémités de l'antenne d'émission, les transducteurs de l'antenne de réception $(T_1 - T_n)$ étant reliés à des moyens déphaseurs à prises multiples $(D_1 - D_n)$ et coopérant avec des moyens sommateurs $(S_1 - S_q)$ pour constituer un ensemble de voies de détection préformée $(V_1 - V_q)$, et les lobes principaux des voies de détection préformées recouvrant un par un les lobes d'émission afin que l'ensemble emission-réception ait un diagramme global à pouvoir séparateur renforcé pour chacune des voies préformées, caractérisé en ce que, pour que les maxima des lobes secondaires du diagramme émission-réception soient inférieurs à - 16 dB et que le lobe principal de ce diagramme ne s'élargisse pas d'un coefficient supérieur à 1,3, les transducteurs de réception $(T_1 - T_n)$ sont reliés aux moyens déphaseurs $(D_1 - D_n)$ par l'intermédiaire de moyens de pondération $(R_1 - R_n)$ de l'amplitude des signaux reçus par ces transducteurs, et les transducteurs d'émission $(T_i, T_{n-i+1})$ sont séparés par une longueur $L_E$ nettement inférieure à $L_R$, de façon à élargir par ce rapprochement les lobes du diagramme d'émission et compenser au moins en partie les effets de l'élargissement du lobe principal du diagramme de réception provoqué par les moyens de pondération.

D'autres caractéristiques et avantages ressortiront de la description qui va suivre illustrée par les figures, qui représentent:

- figure 1, un système d'antenne, suivant l'art antérieur;
- figure 2, les diagrammes d'émission, de réception et d'émission-réception, suivant l'art antérieur;
- figure 3, les diagrammes d'émission, de réception et d'émission-réception avec une pondération pour les antennes de longueurs égales;
- figure 4, un système d'antenne, suivant l'invention;
- figure 5, un diagramme, montrant la variation de la résolution angulaire et du niveau du premier lobe secondaire, suivant le rapport des longueurs d'antennes;
- figure 6, un bloc diagramme, montrant un exemple de réalisation suivant l'invention;
- figure 7 et 8, une fonction de pondération et le diagramme emission-reception résultant.

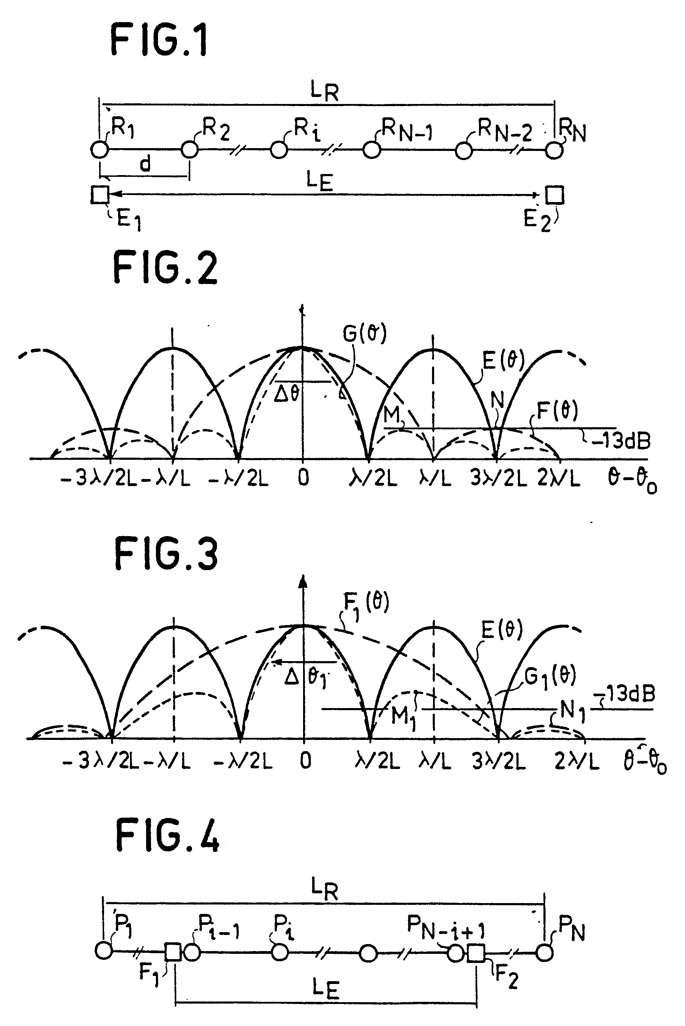

La figure 1, montre schématiquement, la disposition des antennes d'émission et de réception, suivant l'art antérieur du document FR-2 412 177, déjà cité. Le dispositif étant appliqué à la détection acoustique sous-marine.

L'antenne d'émission comporte deux transducteurs émetteurs $E_1$, $E_2$ et l'antenne de réception N transducteurs récepteurs $R_1$, $R_2$ ... $R_N$ équidistants de d. Les deux émetteurs $E_1$, $E_2$ sont séparés de la distance $L_E$ tandis que la longueur de l'antenne de réception est $L_R = (N-1)d$ avec $L_E = L_R = L$, L étant la longueur égale des deux antennes.

Les deux émetteurs $E_1$ et $E_2$ émettant chacun simultanément un signal à la fréquence f, l'espace est insonifié par les interférences des deux signaux et un point éloigné situé dans la direction faisant l'angle $\theta$ avec la normale à l'antenne, reçoit le signal, dont l'amplitude sera à une constante multiplicative près donnée par:

$$E(\theta) = \cos(\pi L \sin \theta / \lambda) \quad (1)$$

où l'on suppose que l'émission des deux transducteurs est en phase, $\lambda$ est la longueur d'onde dans le milieu de propagation.

Si les émissions se font en opposition de phase, $E(\theta)$ sera donnée par:

$$E(\theta) = \sin(\pi L \sin \theta / \lambda) \quad (2)$$

Suivant l'Art Antérieur, les signaux de l'antenne de réception sont appliqués sans pondération à des circuits de formation de voies, dans des directions repérés par l'angle $\theta_0$. Le diagramme de directivité de l'antenne de réception seule, supposée pleine sur toute la longueur L est $F(\theta)$ qui correspond à un système d'antenne comportant un seul transducteur émetteur. $F(\theta)$ est donné pour une voie préformée dans la direction correspondant à l'angle $\theta_0$ avec,

$$F(\theta) = \frac{\sin(\pi L (\sin \theta - \sin \theta_0)/\lambda)}{\pi L (\sin \theta - \sin \theta_0)/\lambda} \quad (3)$$

La fonction de directivité globale $G(\theta)$ du système d'antennes de la figure 1 est donnée par:

$$G(\theta) = E(\theta).F(\theta) \quad (4)$$

Les directions $\theta_0$ des voies préformées sont telles, qu'elles correspondent aux maxima de la fonction $E(\theta)$. Ainsi si les deux transducteurs émetteurs $E_1$ et $E_2$ sont en phase, les angles des voies $\theta_0$, seront donnée d'après (1), tels que:

$$\pi L \sin \theta_0 / \lambda = p\pi \quad (5)$$

p étant un nombre entier.

En tenant compte (3), (4), et (5) on trouve pour $G(\theta)$,

$$G(\theta) = \frac{\sin 2\pi L (\sin \theta - \sin \theta_0)/\lambda}{2\pi L (\sin \theta - \sin \theta_0)/\lambda} \quad (6)$$

La fonction de directivité $G(\theta)$ donnée par la relation (6), correspond à une antenne de réception de longueur double dans la direction $\theta_0$, comparée à celle donnée par la relation (3), si l'on suppose une émission par un transducteur unique.

La figure 2 représente les valeurs absolues des fonctions $E(\theta)$, $F(\theta)$ et $G(\theta)$, suivant les relations (1), (3) et (6) en fonction de $\theta - \theta_0$. On voit que la largeur angulaire à 3 dB, $\Delta\theta$, de la fonction $G(\theta)$ (en pointillé) est la moitié de cette largeur correspndant à la fonction $F(\theta)$ (en traits interrompus). La fonction $E(\theta)$ (en traits pleins) à ses maxima pour $\theta - \theta_0 = p\lambda/L$. On a pour simplifier assimilé $\sin \theta_0$ et $\theta$ aux angles $\theta_0$ et $\theta$.

On a représenté les premiers maxima secondaires N et M des fonctions $F(\theta)$ et $G(\theta)$, qui sont tous les deux à -13 dB.

Les voies de réception étant formées dans les directions correspondant aux maxima d'émission la couverture n'est pas totale car entre chaque voie il existe une zone faiblement insonifiée. Pour y remédier, on effectue deux émissions simultanées séparables des précédentes, par exemple à fréquences différentes, mais déphasées de $\pi$ de manière à obtenir des maxima aux endroits des zéros précédents; puis on forme des voies dans les directions de ces maxima. Les fonctions d'émission dans le cas d'un déphasage de $\pi$ étant donné par la relation (2) où l'on a remplacé $\pi$ par la valeur de la longueur d'onde correspondant à la deuxième fréquence.

Si les fréquences sont différentes pour garder des diagrammes identiques mais décalés de $\frac{\lambda}{2}$ on utilise deux paires de transducteurs séparés par des distances $L_1$ et $L_2$ telles que $L_1 F_1 = L_2 F_2$, mais $L_1$ et $L_2$ sont peu différentes et sensiblement égales à L.

Un niveau de lobes secondaires à -13 dB, suivant l'art antérieur, est souvent gênant en acoustique sous-marine.

Il est connu pour une antenne de réception avec un émetteur unique de réduire le niveau des lobes secondaires par une pondération de l'amplitude des signaux reçus. La loi de pondération $f(x)$ en fonction de la coordonnée du transducteur x est souvent du type connu de Tschebycheff.

Suivant l'invention, on réduit les lobes secondaires de systèmes d'antennes comprenant deux émetteurs et une antenne de réception pleine, en optimisant à la fois, le rapport $L_E/L_R$, qui est le rapport des longueurs de l'antenne d'émission et de réception et la loi de pondération f(x).

La pondération connue utilisée pour un système d'antennes à un seul émetteur ne convient pas pour le système d'antennes à émission interférométrique comme le montre la figure 3.

Sur cette figure 3 on a représenté en fonction de $\theta - \theta_o$ la fonction de directivité d'émission $E(\theta)$ (en traits pleins), la fonction de directivité de l'antenne de réception pondérée $F_1(\theta)$ (en traits interrompus) et la fonction de directivité globale $G_1(\theta)$. Dans cet exemple la fonction $F_1(\theta)$ obtenue par pondération est telle que le niveau des secondaires est abaissé par rapport à une antenne non pondérée. On note sur cette figure que le maximum $N_1$ est plus bas que le maximum N de la figure 2.

La figure 3, montre, que la fonction de directivité globale $G_1(\theta)$, à une largeur angulaire $\Delta\theta_1$ du lobe principal à 3 dB, sensiblement égale à la valeur $\Delta\theta$ de l'antenne non pondérée. Par contre le maximum $M_1$ du premier lobe secondaire de $G_1(\theta)$ est supérieur à celui M qui correspond à l'antenne non pondérée (figure 2).

Ce résultat s'explique par le fait que le lobe principal de la fonction de directivité de l'antenne de réception pondérée $F_1(\theta)$ s'est élargi tandis que la fonction de directivité d'émission $E(\theta)$ n'a pas changé. Il s'ensuit que le niveau du premier lobe secondaire de $G_1(\theta)$ est le résultat du produit du lobe principal de $F(\theta)$ par la première arche latérale de $E(\theta)$. En revanche, le lobe principal de $G_1(\theta)$ ne s'est pas élargi, sa largeur étant imposée par $E(\theta)$.

A titre d'exemple on considère une antenne de réception de longueur $L_R = 500 \lambda$.

Si $L_E = L_R$ et si les signaux ne sont pas pondérés, d'après la relation (6) et la figure 2, la largeur $\Delta\theta$ du lobe principal de $G(\theta)$ est égal à $0,88 \times 10^{-3}$ radians et le niveau du premier lobe secondaire est à -13 dB. Si on a toujours $L_E = L_R$ et que l'on prend une loi de pondération de Tschebycheff, pour que le maximum $N_1$ du premier lobe secondaire de $F_1(\theta)$ (figure 3) soit à -30 dB, on trouve que le maximum $M_1$ du premier lobe secondaire de $G_1(\theta)$ est à -9 dB. Cela montre qu'en fait cette pondération détériore le contraste.

Le système d'antennes conformément à l'invention est représenté schématiquement sur la figure 4. La longueur $L_E$ de l'antenne d'émission est choisie de longueur plus petite que la longueur $L_R$ de l'antenne de réception. Cette réduction de la longueur de l'antenne d'émission entraîne un élargissement de chaque lobe de la directivité d'émission $E_2(\theta)$ et par suite un élargissement du lobe principal de la directivité

résultante $G_2(\theta)$.

Selon l'invention, le choix du rapport $L_E/L_R$ est effectué en combinaison avec le choix de la loi de pondération de l'antenne de réception pour que le niveau des lobes secondaires et la largeur de lobe principal soient contenus dans les limites données.

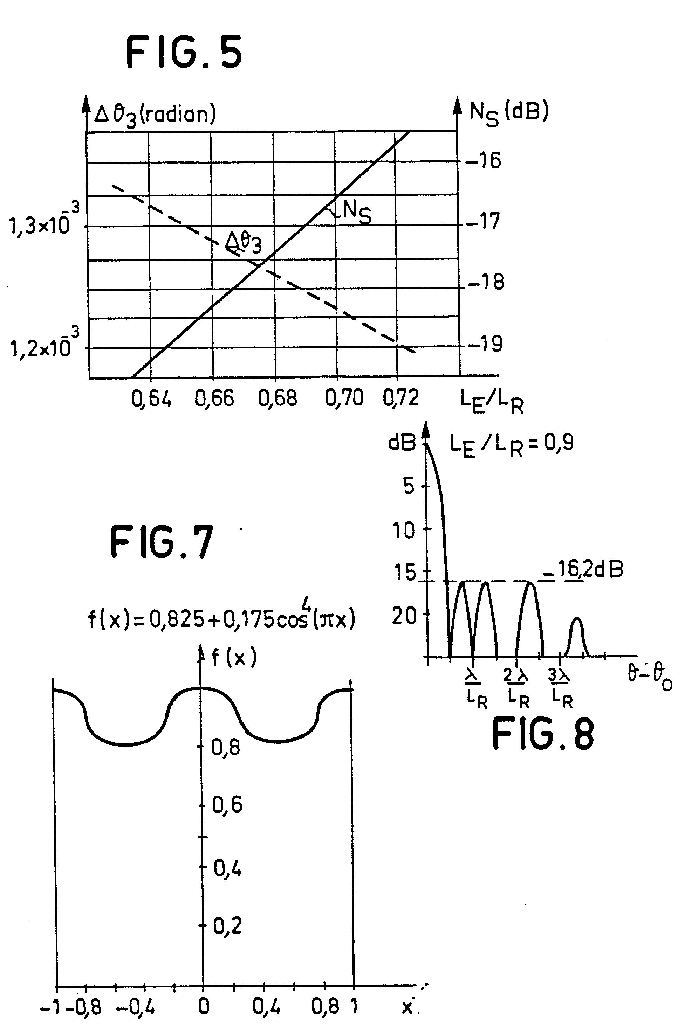

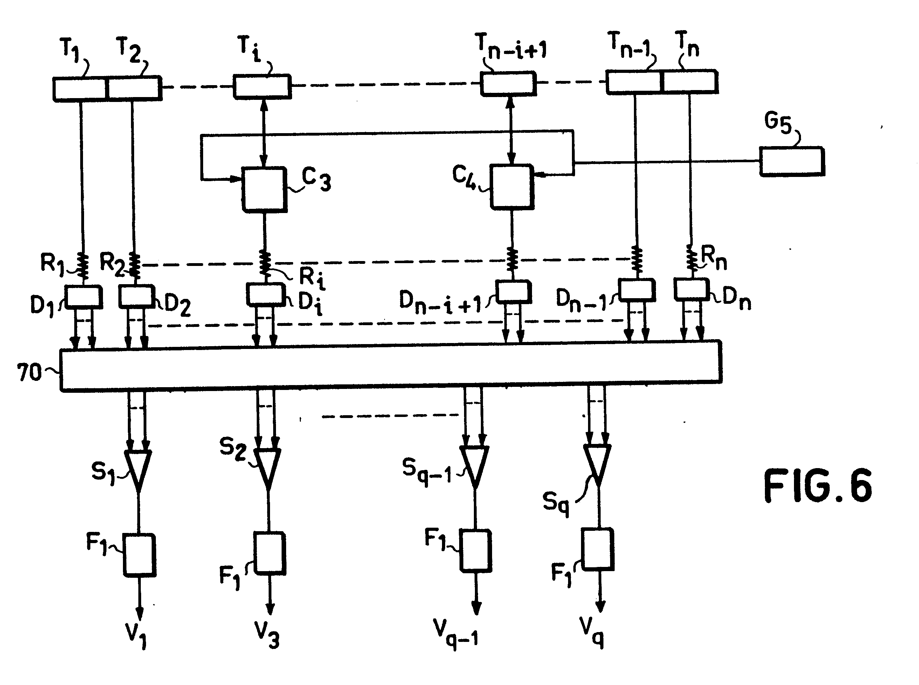

Sur la figure 5 on a tracé les variations de la largeur angulaire du lobe principal $\Delta\theta_3$ à 3 dB et du niveau du premier lobe secondaire $N_S$ en fonction de $L_E/L_R$. La pondération est la même que précédemment. Comme le montre cette figure 5, lorsque le rapport $L_E/L_R$ décroît, le niveau du premier secondaire $N_S$ figuré en trait plein décroît tandis que la largeur du lobe principal à 3 dB d'atténuation $\Delta\theta_3$ croît. Ainsi en choisissant $L_E/L_R = 0,67$ on obtient $N_S = -18$ dB et $_3 = 1,3.10^{-3}$ radians.

Sur la figure 6 on a représenté un exemple de réalisation suivant l'invention. L'antenne d'émission-réception est formée par les n transducteurs $T_1$ à $T_n$. Parmi ces transducteurs, deux transducteurs $T_i$ et $T_{n-i+1}$ sont utilisés pour l'émission. Ils sont choisis de telle sorte que la distance les séparant, soit dans un rapport donné avec la distance séparant les deux transducteurs extrêmes $T_1$ et $T_n$. Les signaux reçus par les transducteurs sont pondérés en amplitude par des résistances électriques $R_1$, $R_2$ ... $R_n$ dont les valeurs sont ajustées compte tenu de la loi de pondération choisie.

La commutation emission-réception sur les transducteurs $T_i$ et $T_{n-i+1}$ s'effectue au moyen des commutateurs $C_3$ et $C_4$. L'émission se fait à la fréquence $f_1$ dont les signaux sont fournis par le générateur $G_5$ relié aux commutateurs $C_3$ et $C_4$.

On forme ensuite q voies angulaires permettant de couvrir convenablement le secteur angulaire surveillé. Pour cela les n signaux reçus et pondérés sont déphasés dans les déphaseurs $D_1$, $D_2$ ... $D_n$ puis sommés de façon appropriée dans les sommateurs $S_1$, $S_2$ ... $S_q$ par l'intermédiaire d'une matrice de câblage 70. Les signaux de voies de réception sont filtrés autour de $f_1$ par les filtres $F_1$. A la sortie des filtres on obtient q signaux de voies $V_1$, $V_2$ ... $V_q$.

Suivant une variante de l'invention on choisit des fonctions f(x) pour les pondérations autres, que des fonctions de Tschebycheff. Suivant un exemple de réalisation, on prend une fonction de pondération f(x) telle que

$$f(x) = 0,825 + 0,175 \cos^4(x\pi) \qquad (7)$$

représenté sur la figure 7, on adopte pour $L_E/L_R$ la valeur 0,9.

Sur la figure 8 on a représenté la fonction de directivité globale pour $(\theta - \theta_o) > 0$ avec cette pondération, obtenue en multipliant la transformée de Fourier de f(x) par la fonction $E(\theta)$. On voit sur cette figure que la largeur angulaire du lobe principal à 3 dB, pour cette fonction de directivité globale est de l'ordre de $10^{-3}$ radians, si $L_3 = 500 \lambda$, et que les maxima secondaires ne dépassent pas -16,2 dB.

En conclusion on a décrit un système d'antennes permettant d'obtenir à la fois une bonne résolution angulaire et de faibles lobes secondaires.

**Revendications**

1. Système d'antennes pour une détection d'ondes, notamment sonar, à pouvoir séparateur élevé, du type comprenant une antenne d'émission et une antenne de réception, l'antenne de réception étant composée de transducteurs ($T_1$ - $T_n$) répartis sur une longueur $L_R$, et l'antenne d'émission étant composée de deux transducteurs ($T_i$, $T_{n-i+1}$) placés sensiblement aux extrémités de l'antenne d'émission, les transducteurs de l'antenne de réception ($T_1$ - $T_n$) étant reliés à des moyens déphaseurs à prises multiples ($D_1$ - $D_n$) et coopérant avec des moyens sommateurs ($S_1$ - $S_q$) pour constituer un ensemble de voies de détection préformée ($V_1$ - $V_q$), et les lobes principaux des voies de détection préformées recouvrant un par un les lobes d'émission afin que l'ensemble émission-réception ait un diagramme global à pouvoir séparateur renforcé pour chacune des voies préformées, caractérisé en ce que, pour que les maxima des lobes secondaires du diagramme émission-réception soient inférieurs à - 16 dB et que le lobe principal de ce diagramme ne s'élargisse pas d'un coefficient supérieur à 1,3, les transducteurs de réception ($T_1$ - $T_n$) sont reliés aux moyens déphaseurs ($D_1$ - $D_n$) par l'intermédiaire de moyens de pondération ($R_1$ - $R_n$) de l'amplitude des signaux reçus par ces transducteurs, et les transducteurs d'émission ($T_i$, $T_{n-i+1}$) sont séparés par une longueur $L_E$ nettement inférieure à $L_R$, de façon à élargir par ce rapprochement les lobes du diagramme d'émission et compenser au moins en partie les effets de l'élargissement du lobe principal du diagramme de réception provoqué par les moyens de pondération.

2. Système selon la revendication 1, caractérisé en ce que les moyens de pondération sont conformes à une loi de Tschebycheff, et que la longueur $L_E$ est sensiblement égale à 0,67 fois la longueur $L_R$.

3. Système selon la revendication 1, caractérisé en ce que les moyens de pondération sont conformes à une loi $f(x) = 0,825 + 0,175 \cos^4(\pi x)$ où x est une coordonnée prise le long de l'antenne de réception à partir de son centre, et que la longueur $L_E$ est sensiblement égale à 0,9 fois la longueur $L_R$.

**Patentansprüche**

1. Hochauflösendes Antennensystem zur Detektion von Wellen, insbesondere Sonarwellen, mit einer Sendeantenne und einer Empfangsantenne, von denen die Empfangsantenne aus über eine Länge $L_R$ verteilten Transduktoren ($T_1$ - $T_n$) und die Sendeantenne aus zwei im wesentlichen an den Enden der Sendeantenne angebrachten Transduktoren ($T_i$, $T_{n-i+1}$) besteht, wobei die Transduktoren der Empfangsantenne ($T_1$ - $T_n$) an Phasenschiebermittel ($D_1$ - $D_n$) mit mehreren Abgriffen angeschlossen sind und mit Addiermitteln ($S_1$ - $S_q$) zur Bildung einer Gesamtheit vorgeformter Detektorkanäle ($V_1$ - $V_q$) zusammenwirken, und wobei die Hauptstrahlungskeulen der vorgeformten Detektorkanäle je einzeln die Sendestrahlungskeulen überdecken, so daß die Sende-Empfangsgesamtheit ein globales Diagramm mit erhöhtem Auflösevermögen für jeden vorgeformten Kanal besitzt, dadurch gekennzeichnet, daß, zur Beschränkung der Maxima der Sekundärkeulen des Sende-Empfangsdiagramms unter -16 dB und zur Beschränkung der Verbreiterung der Hauptkeule dieses Diagramms um einen Koeffizienten von höchstens 1,3, die Empfangstransduktoren ($T_1$ - $T_n$) an die Phasenschiebermittel ($D_1$ - $D_n$) über Mittel ($R_1$ - $R_n$) zur Gewichtung der Amplitude der von den Transduktoren empfangenen Signale angeschlossen sind, und daß die Sendetransduktoren ($T_i$, $T_{n-i+1}$) durch eine Strecke $L_E$ voneinander getrennt sind, die wesentlich kleiner als $L_R$ ist, so daß durch diese Annäherung die Keulen des Sendediagramms verbreitert und zumindest ein Teil der Wirkungen der Verbreiterung der Hauptkeule des Empfangsdiagramms kompensiert wird, die von den Gewichtungsmitteln verursacht werden.

2. System nach Anspruch 1, dadurch gekennzeichnet, daß die Gewichtungsmittel einem Tschebycheff'schen Gesetz entsprechen, und die Länge $L_E$ im wesentlichen gleich dem 0,67-fachen der Länge $L_R$ ist.

3. System nach Anspruch 1, dadurch gekennzeichnet, daß die Gewichtungsmittel einem Gesetz $f(x) = 0,825 + 0,175 \cos^4(\pi x)$ entsprechen, wobei x ein entlang der Empfangsantenne von der Mitte aus gemessener Koordinatenwert ist, und daß die Länge $L_E$ im wesentlichen gleich dem 0,9-fachen der Länge $L_R$ ist.

**Claims**

1. A high resolution antenna system for the detection of waves, notably sonar waves, of a type comprising a transmit antenna and a receive antenna, whereof the receive antenna is composed of transducers ($T_1$ - $T_n$) distributed over a distance length $L_R$, and the transmit antenna is composed of two transducers ($T_{n-1}$, $T_{ni+1}$) placed substantially at the ends of the transmit antenna, the transducers of the receive antenna ($T_1$ - $T_n$) being connected to multitip phase shifting means ($D_1$ - $D_n$) and cooperating

with adding means $(S_1 - S_q)$ for constituting an assembly of preformed detection channels $(V_1 - V_q)$, and whereof the main lobes of the preformed detection channels overlap the transmit lobes one by one, so that the entire transmit-receive-assembly presents a global diagram with increased resolving power for each of the preformed channels, characterized in that, for the maxima of the secondary lobes of the transmit-receive diagram to be inferior to -16 dB and for the main lobe of this diagram not to be enlarged by a coefficient superior to 1,3, the receive transducers $(T_1 - T_n)$ are connected to the phase shifting means $(D_1 - D_n)$ via ponderation means $(R_1 - R_n)$ for ponderating the amplitude of the signals received from the transducers, and the transmit transducers $(T_i, T_{n-i+1})$ are separated from each other by a distance length $L_E$ which is considerably smaller than $L_R$, so as to enlarge by this reduced distance the lobes of the transmit diagram and to compensate at least partially effects of the broadening the main lobe of the receive diagram caused by the ponderation means.

2. A system according to claim 1, characterized in that the ponderation means behave in conformity with a Tschebycheff law, and that the length $L_E$ is substantially equal to 0,67 times the length $L_R$.

3. A system according to claim 1, characterized in that the ponderation means behave in conformity with a law $f(x) = 0,825 + 0,175 \cos^4(\pi x)$, wherein x is a coordinate factor taken along the receive antenna, starting at its midpoint, and that the length $L_E$ is substantially equal to 0,9 times the length $L_R$.

# FIG.1

$L_R$

$R_1$  $R_2$  $R_i$  $R_{N-1}$  $R_{N-2}$  $R_N$

$d$

$L_E$

$E_1$  $E_2$

# FIG.2

$G(\theta)$

$E(\theta)$

$\Delta\theta$

$N$

$M$

$F(\theta)$

$-13dB$

$-3\lambda/2L$  $-\lambda/L$  $-\lambda/2L$  $0$  $\lambda/2L$  $\lambda/L$  $3\lambda/2L$  $2\lambda/L$  $\theta-\theta_0$

# FIG.3

$F_1(\theta)$

$E(\theta)$

$\Delta\theta_1$

$G_1(\theta)$

$-13dB$

$M_1$  $N_1$

$-3\lambda/2L$  $-\lambda/L$  $-\lambda/2L$  $0$  $\lambda/2L$  $\lambda/L$  $3\lambda/2L$  $2\lambda/L$  $\theta-\theta_0$

# FIG.4

$L_R$

$P_1$  $P_{i-1}$  $P_i$  $P_{N-i+1}$  $P_N$

$F_1$  $F_2$

$L_E$

1

# FIG.5

# FIG.7

$$f(x) = 0,825 + 0,175\cos^4(\pi x)$$

# FIG.8

FIG.6

0 084 466